# EUROPEAN PATENT APPLICATION

(11) **EP 4 741 636 A1**
(43) Date of publication of application: **13.05.2026**
(21) Application number: 25214446.4
(22) Date of filing: 07.11.2025
(51) Int. Cl.: F01D 21/00, F01D 25/28, F01D 25/12

(54) **COOLING RESTORATION FOR INSTRUMENTED BLADE OUTER AIR SEAL**

(30) Priority: 07.11.2024 US 202418940489
(71) Applicant: RTX Corporation, Farmington, CT 06032 (US)
(72) Inventor: HACKETT, Bryan James, Berlin, 06037 (US); WARREN, Eli, Bend, 97703-8475 (US)
(74) Representative: Dehns

(57) **Abstract**

An apparatus includes a blade outer air seal (BOAS) (100; 400), a measurement instrument adapter (200; 300), and a measurement instrument (130; 430). The BOAS (100; 400) includes at least one first channel (202, 204, 206; 302) configured to permit air to flow from an entry point (416A) of the at least one first channel (202, 204, 206; 302) to an exit point (416B) of the at least one first channel (202, 204, 206; 302). The measurement instrument adapter (200; 300) includes at least one second channel (110, 116; 404, 416) configured to permit air to flow from an entry point (110A) of the at least one second channel (110, 116; 404, 416) to an exit point (110B) of the at least one second channel (110, 116; 404, 416). The measurement instrument adapter (200; 300) is disposed within a first receptacle (114; 208; 414) of the measurement instrument adapter (200; 300) configured to receive the measurement instrument (130; 430). The measurement instrument adapter (200; 300) is disposed within a second receptacle (114; 414) of the BOAS (100; 400) configured to receive the measurement instrument adapter (200; 300). The apparatus is configured for installation in a gas-turbine engine.

## Description

### TECHNICAL FIELD

This disclosure generally relates to mechanical devices. More specifically, this disclosure relates to cooling restoration for an instrumented blade outer air seal (BOAS) for a gas turbine engine.

### BACKGROUND

During gas turbine engine development, measurement instruments may be mounted at different locations within the gas turbine engine. For example, a probe may be placed within a post combustion turbine stage to measure blade tip clearance (BTC). To accommodate the measurement instrument, a component such as a BOAS may be modified to accept the measurement instrument, for example, by machining a receptacle for the measurement instrument in the component. However, such machining operations may negatively alter the performance of the component. For example, in the case of a BOAS, the receptacle for the measurement instrument may interfere with a BOAS cooling channel when the measurement instrument is placed in the receptacle. This may lead to overheating/uneven cooling and inaccurate measurement collection.

### SUMMARY

The present invention relates to cooling restoration for an instrumented blade outer air seal (BOAS).

In an aspect of the present invention, a measurement instrument adapter includes a first receptacle configured to receive a measurement instrument, and at least one first channel configured to permit air to flow from an entry point of the at least one first channel to an exit point of the at least one first channel. The measurement instrument adapter is configured to interface with a second receptacle of a BOAS configured for installation in a gas-turbine engine.

Any single one or any combination of the following features may be used with the examples above. The at least one first channel may be configured to direct air flowing within the at least one first channel around the measurement instrument when the measurement instrument is disposed within the first receptacle. The at least one first channel may be configured to permit air flowing within the at least one first channel to contact the measurement instrument. The measurement instrument may be a blade tip clearance (BTC) probe. The BOAS may include at least one second channel configured to permit air to flow from an entry point of the at least one second channel to an exit point of the at least one second channel. The second receptacle may intersect the at least one second channel. The at least one first channel may be configured to permit flow of air through the at least one second channel via the at least one first channel when the measurement instrument adapter is disposed within the second receptacle. The at least one first channel may be configured to permit air flowing through the at least one first channel to contact the BOAS when the measurement instrument adapter is disposed within the second receptacle. The measurement instrument adapter may be configured such that an air flow restriction of the at least one first channel does not exceed an air flow restriction of the at least one second channel when the measurement instrument adapter is disposed within the second receptacle.

In a further aspect of the present invention, a BOAS includes a first receptacle configured to receive a measurement instrument adapter. The measurement instrument adapter includes a second receptacle configured to receive a measurement instrument, and at least one first channel configured to permit air to flow from an entry point of the at least one first channel to an exit point of the at least one first channel. The BOAS is configured for installation in a gas-turbine engine.

Any single one or any combination of the following features may be used with the examples above. The at least one first channel may be configured to direct air flowing within the at least one first channel around the measurement instrument when the measurement instrument is disposed within the second receptacle. The at least one first channel may be configured to permit air flowing within the at least one first channel to contact the measurement instrument. The measurement instrument may be a BTC probe. The BOAS may include at least one second channel configured to permit air to flow from an entry point of the at least one second channel to an exit point of the at least one second channel. The second receptacle may intersect the at least one second channel. The at least one first channel may be configured to permit flow of air through the at least one second channel via the at least one first channel when the measurement instrument adapter is disposed within the first receptacle. The at least one first channel may be configured to permit air flowing through the at least one first channel to contact the BOAS when the measurement instrument adapter is disposed within the first receptacle. The measurement instrument adapter may be configured such that an air flow restriction of the at least one first channel does not exceed an air flow restriction of the at least one second channel when the measurement instrument adapter is disposed within the second receptacle.

In a further aspect of the present invention, an apparatus includes a BOAS, a measurement instrument adapter, and a measurement instrument. The BOAS includes at least one first channel configured to permit air to flow from an entry point of the at least one first channel to an exit point of the at least one first channel. The measurement instrument adapter includes at least one second channel configured to permit air to flow from an entry point of the at least one second channel to an exit point of the at least one second channel. The measurement instrument adapter is disposed within a first receptacle of the measurement instrument adapter configured to receive the measurement instrument. The measurement instrument adapter is disposed within a second receptacle of the BOAS configured to receive the measurement instrument adapter. The apparatus is configured for installation in a gas-turbine engine.

Any single one or any combination of the following features may be used with the examples above. The at least one second channel may be configured to direct air flowing within the at least one second channel around the measurement instrument. The at least one second channel may be configured to permit air flowing within the at least one second channel to contact the measurement instrument. The measurement instrument may be a blade tip clearance (BTC) probe. The second receptacle may intersect the at least one first channel. The at least one second channel may be configured to permit flow of air through the at least one first channel via the at least one second channel. The at least one second channel may be configured to permit air flowing through the at least one second channel to contact the BOAS. The measurement instrument adapter may be configured such that an air flow restriction of the at least one second channel does not exceed an air flow restriction of the at least one first channel.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURES 1A and1B illustrate an example blade outside air seal modified to accept a measurement instrument in accordance with this disclosure;
FIGURES 2A and 2B illustrate an example measurement instrument adapter in accordance with this disclosure;
FIGURE 3 illustrates another example measurement instrument adapter in accordance with this disclosure; and
FIGURES 4A and 4B illustrate an example blade outside air seal modified to accept a measurement instrument adapter in accordance with this disclosure.

### DETAILED DESCRIPTION

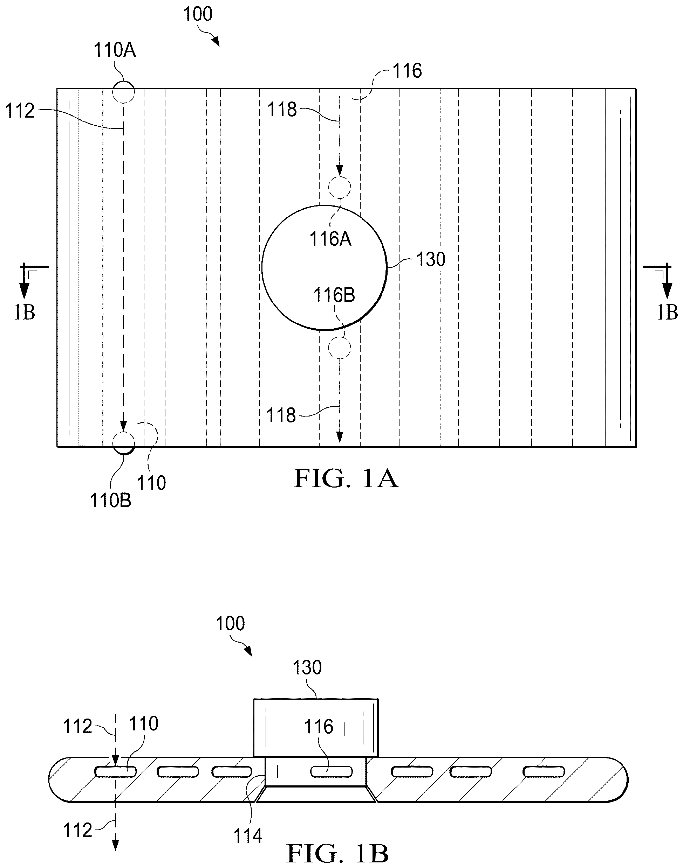

FIGURES 1A through 4B, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, a component such as a blade outer air seal (BOAS) for a gas turbine engine may be modified to accept a measurement instrument, for example, by machining a receptacle for the measurement instrument in the component. For example, one method of gathering blade tip clearance data for a gas turbine engine is to have a blade tip clearance (BTC) probe mounted radially outboard of a rotating stage of interest. This leads to outer air seal (OAS) mounting allowing a direct measurement of the gap between the blade tip and OAS. Blade tip measurements can be taken in a variety of ways including eddy current, capacitance based, and optical, all of which utilize a line of sight to the tip of the blade. Therefore, BOAS re-operations are performed, usually in the form of through holes, to allow probe mounting and the aforementioned line of sight. In some cases, the BOAS has internal cooling passages which when re-operations are added may be intersected. The result is an interruption of the intended BOAS cooling scheme. For example, the receptacle for the measurement instrument may interfere with a BOAS cooling channel when the measurement instrument is placed in the receptacle, causing uneven cooling or overheating of the BOAS.

FIGURES 1A and 1B illustrate an example BOAS 100 modified to accept a measurement instrument in accordance with this disclosure. FIGURE 1A illustrates a view of BOAS 100 looking engine radial from outside, while FIGURE 1B illustrates a view of BOAS 100 looking engine tangential. As shown in FIGURES 1A and 1B, BOAS 100 includes a plurality of channels which includes channel 110 and channel 116. BOAS 100 further includes a receptacle 114 in which a measurement instrument 130 is disposed. Receptacle 114 is the result of a re-operation (e.g., a milling operation, a drilling operation, etc.) to allow installation of measurement instrument 130. Channels 110 and 116 are configured to permit air to flow from an entry point of the channel to an exit point of the channel during normal operation. For example, cooling air may be provided to BOAS 100 by a high pressure compressor (HPC) stage of a gas turbine engine during operation. In the example of channel 110, an air flow 112 may enter channel 110 at entry point 110A and exit channel 110 at exit point 110B. In the example of channel 116, air flow 118 is obstructed at points 116A and 116B by measurement instrument 130. Due to the obstructed air flow 118, uneven cooling or overheating of BOAS 100 may occur during operation.

Although FIGURES 1A and 1B illustrate one example of a BOAS 100 modified to accept a measurement instrument, various changes may be made to FIGURES 1A-1B. For example, measurement instrument 130 may have a different shape, and receptacle 114 may correspondingly have a different shape. Additionally, receptacle 114 may be disposed at a different location on BOAS 100, and the location may intersect multiple air flow channels.

Due to the negative effect of modification for installation of a measurement instrument on the cooling performance of a BOAS, it is desirable to restore the cooling path to the BOAS that was lost during the modification of the BOAS and installation of the measurement instrument. Various embodiments of the present disclosure provide cooling restoration for an instrumented BOAS.

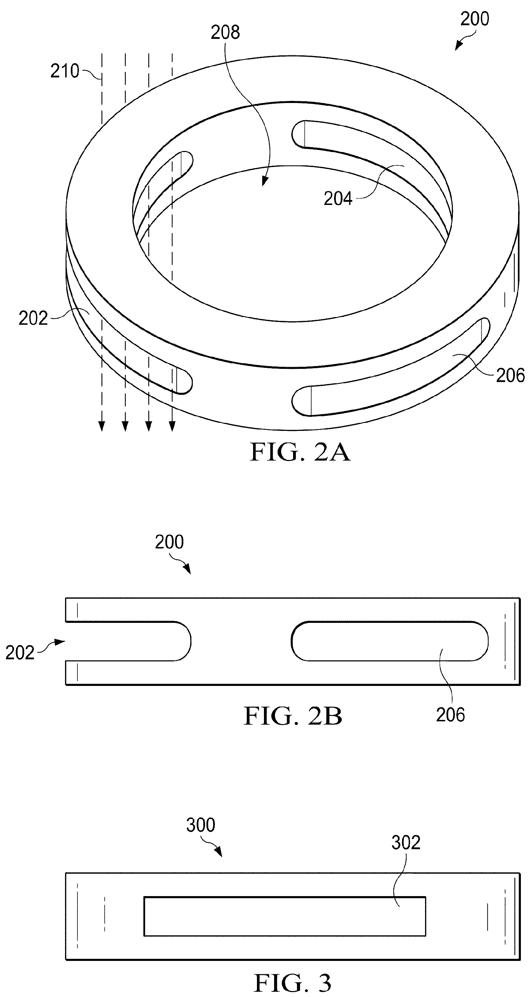

FIGURES 2A and 2B illustrate an example measurement instrument adapter 200 in accordance with this disclosure. Measurement instrument adapter 200 is configured to provide cooling restoration for an instrumented BOAS. For example, measurement instrument adapter 200 may be configured to restore air flow to channel 116 of BOAS 100 when measurement instrument 130 is installed in conjunction with measurement instrument adapter 200. FIGURE 2A illustrates a perspective view of measurement instrument adapter 200, while FIGURE 2B illustrates a side view of measurement instrument adapter 200. As shown in FIGURES 2A and 2B, measurement instrument adapter 200 includes channels 202, 204, and 206 and a receptacle 208. Channels 202, 204, and 206 are configured to permit air to flow from an entry point of at least one channel to an exit point of at least one channel. For example, as seen in FIGURE 2A, an air flow 210 is flowing through an entry point and exit point of channel 202. However, air may be permitted to flow differently based on the configuration and installation of measurement instrument adapter 200 into a BOAS. For example, an air flow may flow into an entry point of channel 204, and out of an exit point of channel 206. In some embodiments, at least one channel is configured to direct air flowing within the at least one channel around a measurement instrument disposed within receptacle 208. For example, measurement instrument 130 could be disposed within receptacle 208. Air flowing through at least one of channels 202, 204, and/or 206 would be directed around measurement instrument 130. In some embodiments, at least one channel is configured to permit air flowing within the at least one first channel to contact the measurement instrument. For example, it can be seen in FIGURE 2A that channels 202, 204, and 206 are open to receptacle 208.

Although FIGURES 2A and 2B illustrate one example of a measurement instrument adapter 200 various changes may be made to FIGURES 2A and 2B. For instance, measurement instrument adapter 200 may have a different size or shape according to the application. For example, while shown as circular in shape, measurement instrument adapter 200 may have any size or shape needed to accommodate a particular measurement instrument or installation in a particular location of a BOAS. In another example, measurement instrument adapter may include fewer channels, or may include additional channels to accommodate installation in a particular location of a BOAS.

FIGURE 3 illustrates another example measurement instrument adapter 300 in accordance with this disclosure. Measurement instrument adapter 300 is similar to measurement instrument adapter 200, except that measurement instrument adapter 300 includes a single channel 302 with a rectangular profile and size different rather than the oval profiles of channels 202, 204, and 206. However, it should be understood that a measurement instrument adapter may have any shape, and may include channels of any shape and size. By modifying the size and shape of the channel(s), an air flow restriction of the channel(s) may be increased or decreased.

Although FIGURE 3 illustrates one example of a measurement instrument adapter 200 various changes may be made to FIGURE 3. For example, while shown as circular in shape, measurement instrument adapter 300 may have any size or shape needed to accommodate a particular measurement instrument or installation in a particular location of a BOAS. In another example, measurement instrument adapter may include additional channels, or one or more channels having a different configuration, shape, or size.

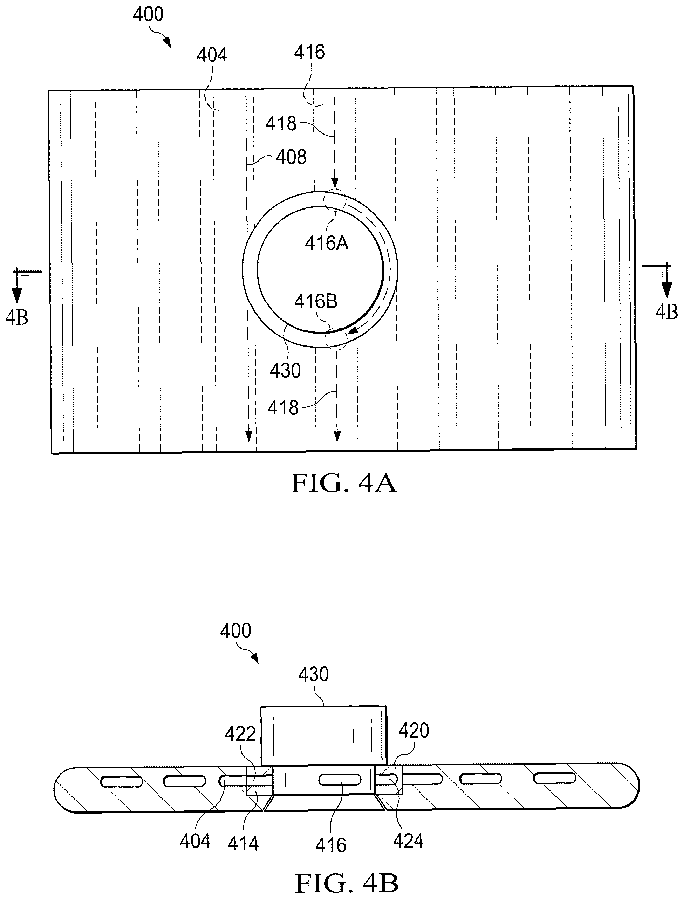

FIGURES 4A and 4B illustrate an example BOAS 400 modified to accept a measurement instrument adapter in accordance with this disclosure. FIGURE 4A illustrates a view of BOAS 400 looking engine radial from outside, while FIGURE 4B illustrates a view of BOAS 400 looking engine tangential. As shown in FIGURES 4A and 4B, BOAS 400 includes a plurality of channels which includes channel 404 and channel 416. BOAS 100 further includes a receptacle 414 in which measurement instrument adapter 200 of FIGURE 2 is disposed. It can be seen that receptacle 414 intersects channel 404 and channel 416. A measurement instrument 430 is disposed within measurement instrument adapter 200. Measurement instrument 430 may be a BTC probe, or any other measurement instrument or sensor. For example, measurement instrument 430 could also be a time of arrival probe.

In some embodiments, at least one channel of measurement instrument adapter 200 is configured to permit flow of air through at least one channel of a BOAS via at least one channel of measurement instrument adapter 200. For example, it can be seen in FIGURE 4B that air flow 408 may enter measurement instrument adapter 200 at point 404A which corresponds with channel 202, and exit at point 404B which also corresponds with channel 202. In another example, air flow 418 may enter measurement instrument adapter 200 at point 416A which corresponds with channel 204, flow around measurement instrument 430, and exit at point 416B which corresponds with channel 206. In some embodiments, at least one channel of measurement instrument adapter 200 is configured to permit air flowing through the at least one channel to contact a BOAS. For example, it can be seen that channel 202 is open to channel 404 of BOAS 400.

In the arrangement of FIGURES 4A and 4B, channel 202 may be configured such that an air flow restriction of channel 202 does not exceed an air flow restriction of channel 404. In this manner, air flow 408 may pass through channels 404 and 202 similarly as air flow 408 would pass through channel 404 before modification of BOAS 400 to accept measurement instrument adapter 200. Similarly, channels 204 and 206 may be configured such that an air flow restriction of channels 204 and 206 does not exceed an air flow restriction of channel 416. In this manner, air flow 418 may pass through channels 416, 202, and 206 similarly as air flow 408 would pass through channel 416 before modification of BOAS 400 to accept measurement instrument adapter 200. Therefore, the arrangement of FIGURES 4A and 4B allows for BOAS 400 to receive even cooling similar as before modification to modification of BOAS 400 to accept measurement instrument adapter 200.

Although FIGURES 4A and 4B illustrate one example of a BOAS 400 modified to accept a measurement instrument adapter, various changes may be made to FIGURES 4A and 4B. For example, measurement instrument adapter 200 may have a different shape, and receptacle 414 may correspondingly have a different shape. Additionally, receptacle 414 may be disposed at a different location on BOAS 400, and the location may intersect different air flow channels, a single air flow channel, etc. according to the configuration of measurement instrument adapter 200. Measurement instrument adapter 200 may comprise of any suitable material, and may be affixed to BOAS 400 by any suitable mechanism. For example, measurement instrument adapter 200 may comprise a metal material, and may be welded to BOAS 400. In another example, measurement instrument adapter 200 may comprise a ceramic or polymer material, and may be affixed to BOAS 400 via one or more fasteners or adhesives. In yet another example, measurement instrument adapter 200 may be friction or press fit to BOAS 400.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A measurement instrument adapter (200; 300) comprising:
a first receptacle (208) configured to receive a measurement instrument (130; 430); and
at least one first channel (202, 204, 206; 302) configured to permit air to flow from an entry point (416A) of the at least one first channel (202, 204, 206; 302) to an exit point (416B) of the at least one first channel (202, 204, 206; 302),
wherein the measurement instrument adapter (200; 300) is configured to interface with a second receptacle (114; 414) of a blade outer air seal (BOAS) (100; 400) configured for installation in a gas-turbine engine.

2. The measurement instrument adapter (200; 300) of Claim 1, wherein the at least one first channel (202, 204, 206; 302) is configured to direct air flowing within the at least one first channel (202, 204, 206; 302) around the measurement instrument (130; 430) when the measurement instrument (130; 430) is disposed within the first receptacle (208).

3. The measurement instrument adapter (200; 300) of Claim 1 or 2, wherein the at least one first channel (202, 204, 206; 302) is configured to permit air flowing within the at least one first channel (202, 204, 206; 302) to contact the measurement instrument (130; 430).

4. The measurement instrument adapter (200; 300) of Claim 1, 2 or 3, wherein the measurement instrument (130; 430) is a blade tip clearance (BTC) probe.

5. The measurement instrument adapter (200; 300) of any preceding claim, wherein the BOAS (100; 400) includes at least one second channel (110, 116; 404, 416) configured to permit air to flow from an entry point (110A) of the at least one second channel (110, 116; 404, 416) to an exit point (110B) of the at least one second channel (110, 116; 404, 416).

6. The measurement instrument adapter (200; 300) of Claim 5, wherein:
the second receptacle (114; 414) intersects the at least one second channel (110, 116; 404, 416);
the at least one first channel (202, 204, 206; 302) is configured to permit flow of air through the at least one second channel (110, 116; 404, 416) via the at least one first channel (202, 204, 206; 302) when the measurement instrument adapter (200; 300) is disposed within the second receptacle (114; 414); and
the at least one first channel (202, 204, 206; 302) is configured to permit air flowing through the at least one first channel (202, 204, 206; 302) to contact the BOAS (100; 400) when the measurement instrument adapter (200; 300) is disposed within the second receptacle (114; 414).

7. The measurement instrument adapter (200; 300) of Claim 5 or 6, wherein an air flow restriction of the at least one first channel (202, 204, 206; 302) does not exceed an air flow restriction of the at least one second channel (110, 116; 404, 416) when the measurement instrument adapter (200; 300) is disposed within the second receptacle (114; 414).

8. A blade outer air seal (BOAS) (100; 400) configured for installation in a gas-turbine engine, the BOAS (100; 400) comprising a second receptacle (114; 414) configured to receive the measurement instrument adapter (200; 300) of any of claims 1 to 4.

9. The BOAS (100; 400) of Claim 8, further comprising at least one second channel (110, 116; 404, 416) configured to permit air to flow from an entry point (110A) of the at least one second channel (110, 116; 404, 416) to an exit point (110B) of the at least one second channel (110, 116; 404, 416).

10. The BOAS (100; 400) of Claim 9, wherein:
the second receptacle (114; 414) intersects the at least one second channel (110, 116; 404, 416);
the at least one first channel (202, 204, 206; 302) is configured to permit flow of air through the at least one second channel (110, 116; 404, 416) via the at least one first channel (202, 204, 206; 302); and
the at least one first channel (202, 204, 206; 302) is configured to permit air flowing through the at least one first channel (202, 204, 206) to contact the BOAS when the measurement instrument adapter (200; 300) is disposed within the second receptacle (114; 414).

11. The BOAS (100; 400) of Claim 9 or 10, wherein an air flow restriction of the at least one first channel (202, 204, 206; 302) does not exceed an air flow restriction of the at least one second channel (110, 116; 404, 416) when the measurement instrument adapter (200; 300) is disposed within the second receptacle (114; 414).

12. An apparatus comprising:
the measurement instrument adapter (200; 300) of any of claims 1 to 4;
a blade outer air seal (BOAS) (100; 400) that includes at least one second channel (110, 116; 404, 416) configured to permit air to flow from an entry point (110A) of the at least one second channel (110, 116; 404, 416) to an exit point (110B) of the at least one second channel (110, 116; 404, 416); and
a measurement instrument (130; 430) disposed within the first receptacle (208) of the measurement instrument adapter (200; 300) configured to receive the measurement instrument (130; 430),
wherein:
the measurement instrument adapter (200; 300) is disposed within a second receptacle (114; 414) of the BOAS (100; 400) configured to receive the measurement instrument adapter (200; 300); and
the apparatus is configured for installation in a gas-turbine engine.

13. The apparatus of Claim 12, wherein:
the second receptacle (114; 414) intersects the at least one second channel (110, 116; 404, 416);
the at least one first channel (202, 204, 206; 302) is configured to permit flow of air through the at least one second channel (110, 116; 404, 416) via the at least one first channel (202, 204, 206; 302); and
the at least one first channel (202, 204, 206; 302) is configured to permit air flowing through the at least one first channel (202, 204, 206; 302) to contact the BOAS (100; 400).

14. The apparatus of Claim 12 or 13, wherein an air flow restriction of the at least one first channel (202, 204, 206; 302) does not exceed an air flow restriction of the at least one second channel (110, 116; 404, 416).
